(19) **Europäisches Patentamt European Patent Office Office européen des brevets**

(11) **EP 2 238 698 B1**

(12) **FASCICULE DE BREVET EUROPEEN**

(45) Date de publication et mention
de la délivrance du brevet:
**21.09.2011 Bulletin 2011/38**

(21) Numéro de dépôt: **09706991.8**

(22) Date de dépôt: **16.01.2009**

(51) Int Cl.:
***H04B 17/00*** *(2006.01)*

(86) Numéro de dépôt international:
**PCT/EP2009/050479**

(87) Numéro de publication internationale:
**WO 2009/095320 (06.08.2009 Gazette 2009/32)**

(54) **PROCEDE ET DISPOSITIF D'OBTENTION D'AU MOINS UNE FREQUENCE DE CALIBRAGE POUR LE CALIBRAGE D'UNE CHAINE DE TRANSMISSION, PRODUIT PROGRAMME D'ORDINATEUR ET MOYEN DE STOCKAGE CORRESPONDANTS**

VERFAHREN UND VORRICHTUNG ZUR ERMITTLUNG MINDESTENS EINER KALIBRIERUNGSFREQUENZ ZUR KALIBRIERUNG EINER ÜBERTRAGUNGSKETTE, ENTSPRECHENDES COMPUTERPROGRAMMPRODUKT UND ENTSPRECHENDES SPEICHERMITTEL

METHOD AND DEVICE FOR OBTAINING AT LEAST ONE CALIBRATION FREQUENCY FOR CALIBRATING A TRANSMISSION CHAIN, CORRESPONDING COMPUTER PROGRAM PRODUCT AND CORRESPONDING STORAGE MEANS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.01.2008 FR 0850560**

(43) Date de publication de la demande:
**13.10.2010 Bulletin 2010/41**

(73) Titulaire: **Sierra Wireless**
**92442 Issy Les Moulineaux Cedex (FR)**

(72) Inventeurs:
• **GORIAUX, Jacques**
**F-78000 Versailles (FR)**
• **BIRONNEAU, Alain**
**F-94210 La Varenne (FR)**
• **RAYMOND, François**
**F-92270 Bois-Colombes (FR)**

(74) Mandataire: **Guéné, Patrick**
**Cabinet Vidon**
**Technopôle Atalante**
**16B, rue de Jouanet**
**35703 Rennes Cedex 7 (FR)**

(56) Documents cités:
**EP-A- 1 389 837     WO-A-01/67621**

**Description**

## 1. Domaine de l'invention

Le domaine de l'invention est celui des réseaux de radiocommunications, et plus particulièrement celui des chaînes de transmission dans de tels réseaux.

L'invention concerne plus précisément l'obtention de fréquences de calibrage pour le calibrage de telles chaînes de transmission comprenant un amplificateur pouvant présenter une ou plusieurs configurations de gain.

Par fréquence de calibrage (aussi appelée par la suite canal de calibrage), on entend une fréquence à laquelle un calibrage va être effectué.

## 2. Arrière-plan technologique

Tel qu'expliqué par l'article « Stations de base pour téléphonie mobile (UMTS-FDD) recommandation sur les mesures », projet du 17 septembre 2003, publié sur le site Internet www.environnement-suisse.ch/electrosmog, la technologie UMTS (pour « Universal Mobile Communication System ») est une technologie de téléphonie mobile de troisième génération. Chaque opérateur de télécommunication exploite son propre réseau UMTS.

Les systèmes de radiocommunication UMTS permettent de transmettre des débits de données nettement plus importants que les systèmes de radiocommunication conformes à la norme GSM (pour « Global System for Mobile »). Ils sont donc indiqués non seulement pour le trafic vocal mais également pour la transmission d'images ou de vidéos numériques.

Dans un système de radiocommunication, chaque terminal de radiocommunication comprend une chaîne de transmission afin de pouvoir émettre de l'information dans le réseau de radiocommunication dans lequel il est prévu pour fonctionner.

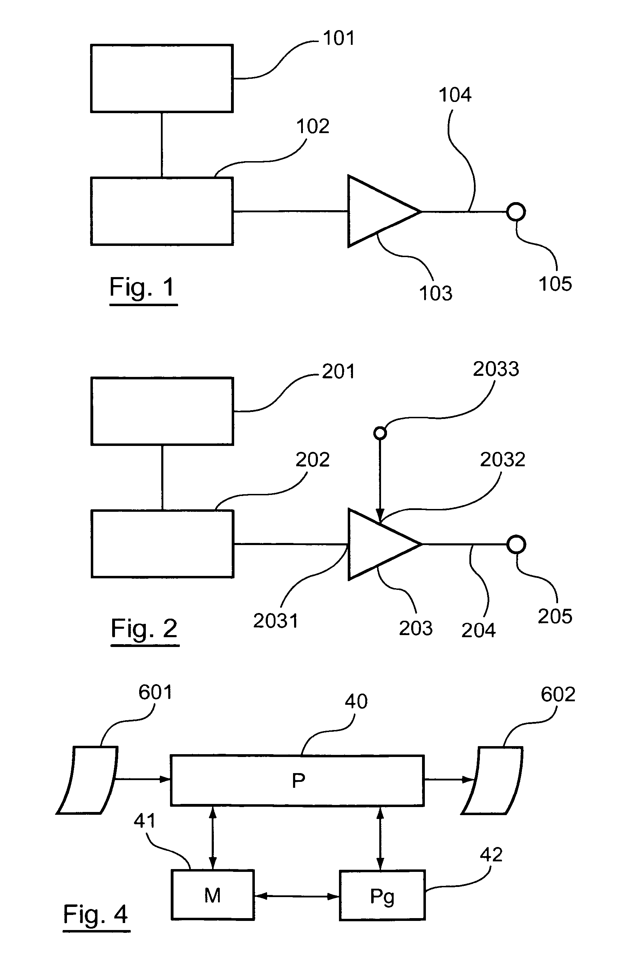

On présente, en relation avec **la *figure 1***, un schéma simplifié d'une chaîne de transmission 100 classique comprenant un amplificateur de puissance 103.

Plus précisément, la chaîne de transmission 100 comprend un convertisseur analogique / numérique 101 (ci-après désigné par CAN 101) qui transmet un signal de commande à un émetteur 102. L'émetteur 102 génère un signal d'information (portant l'information à émettre dans le réseau) et le transmet à l'amplificateur de puissance 103 afin que celui-ci amplifie, avant émission dans le réseau via une antenne (non représentée), le signal d'information. Une sortie 104 de l'amplificateur de puissance 103 est reliée à un point de calibrage 105 qui permet de mesurer la puissance de sortie de l'amplificateur de puissance 103 lors du calibrage de la chaîne 100.

Au niveau du contrôle de la puissance de l'amplificateur 103 de la chaîne de transmission 100, la norme GSM est beaucoup moins contraignante que la norme UMTS. En effet, par exemple, selon la norme GSM900, l'asservissement en puissance doit s'effectuer par pas de 2 dB avec une précision qui s'étend de +/-2dB à +/-5 dB suivant le niveau de puissance entre chaque pas et ce pour une puissance de sortie s'étendant entre 33 dBm et 5 dBm alors que, selon la norme UMTS, l'asservissement en puissance doit s'effectuer par pas de 1 dB avec une précision de +/-0,5 dB entre chaque pas et ce pour une puissance de sortie s'étendant, par exemple, entre +21 dBm et -50 dBm.

L'architecture des chaînes de transmission conformes à la norme GSM est telle que la dispersion fréquentielle pour un niveau de puissance donné est faible. En effet, ces chaînes de transmission ne comprennent aucun filtre de bande et l'amplificateur de puissance 103 est classiquement un amplificateur de puissance non linéaire qui fonctionne en mode compressé. Dans ce cas, afin de réaliser le calibrage il suffit d'effectuer un calibrage à la fréquence centrale et de l'appliquer à toutes les autres fréquences de la bande utilisée.

Parmi les chaînes de transmission conformes à la norme UMTS (ci-après appelées chaînes de transmission UMTS), des premières chaînes de transmission UMTS utilisent un amplificateur à gain fixe. Ces amplificateurs sont plus linéaires que les amplificateurs des chaînes de transmission GSM car spécifiquement polarisés pour ce gain unique. Il est donc possible de calibrer de telles chaînes de transmission sur peu de fréquences et ainsi respecter la norme UMTS.

Cependant, pour réduire la consommation en énergie, il est proposé des secondes chaînes de transmission conformes à la norme UMTS. Ces secondes chaînes de transmission utilisent un amplificateur à double gain : qui peut être configuré de sorte à présenter un gain faible ou un gain fort.

Le calibrage de ces secondes chaînes de transmission est complexe du fait des contraintes imposées par la norme UMTS notamment en termes de précision sur le pas de l'asservissement en puissance de la chaîne de transmission et du fait que l'amplificateur est à double gain.

L'application des techniques classiques de calibrage des premières chaînes UMTS à ces secondes chaînes UMTS ne procure pas une précision suffisante (aux fréquences autres que celle(s) à laquelle le calibrage a été fait) notamment lors du passage de la configuration gain faible à la configuration gain fort (ou inversement) de l'amplificateur. Par ailleurs, ces techniques classiques sont peu robustes face à la dispersion fréquentielle de la chaîne de transmission et sont coûteuses, notamment en terme de mémoire (en effet, ces techniques classiques supposent le stockage d'un nombre important de données).

Le document EP 1 389 837 décrit un procédé de calibration d'une chaîne de transmission.

### 3. Objectifs de l'invention

L'invention, dans au moins un de ses modes de réalisation, a notamment pour objectif de pallier ces inconvénients de l'art antérieur.

Plus précisément, un objectif de l'invention, dans au moins un de ses modes de réalisation, est de fournir une technique qui permette d'obtenir rapidement et efficacement une fréquence de calibrage pour le calibrage d'une chaîne de transmission comprenant un amplificateur de puissance à au moins une configuration de gain.

Un autre objectif de l'invention, dans au moins un de ses modes de réalisation, est de fournir une telle technique qui soit peu coûteuse, notamment en terme de mémoire.

Un autre objectif de l'invention, dans au moins un de ses modes de réalisation, est de fournir une telle technique qui améliore la précision au niveau du passage de la première configuration de gain à la seconde configuration de gain de l'amplificateur ou inversement.

Un autre objectif de l'invention, dans au moins un de ses modes de réalisation, est de fournir une telle technique qui soit robuste face aux dispersions fréquentielles de la chaîne de transmission.

L'invention, dans au moins un de ses modes de réalisation, a encore pour objectif de fournir une telle technique qui soit simple à mettre en oeuvre et ceci pour un faible coût.

### 4. Exposé de l'invention

Conformément à un mode de réalisation particulier, l'invention concerne un procédé d'obtention d'au moins une fréquence de calibrage pour le calibrage d'une chaîne de transmission pouvant transmettre des signaux d'information sur une bande de fréquence comprenant une pluralité de canaux, ladite chaîne comprenant des moyens de génération d'un signal de commande, des moyens d'émission des signaux d'information commandés par ledit signal de commande et un amplificateur desdits signaux d'information, ledit amplificateur pouvant être configuré selon au moins une configuration de gain.

Selon l'invention, le procédé comprend les étapes suivantes :

a) pour chaque canal et chaque configuration de gain, obtention d'une valeur de puissance de sortie de l'amplificateur ;
b) obtention d'au moins une dispersion fréquentielle, à partir desdites valeurs de puissance ;
c) pour chaque dispersion fréquentielle obtenue, détection permettant de détecter si une contrainte liée à ladite dispersion fréquentielle est vérifiée ;
si au moins une contrainte n'est pas vérifiée, alors on effectue les étapes suivantes :
d) obtention d'une sous bande de fréquence courante ;
e) obtention d'une fréquence de calibrage pour ladite sous bande de fréquence courante.

L'invention propose donc de conditionner l'obtention d'une fréquence de calibrage par la détection qu'une contrainte liée à une dispersion fréquentielle est vérifiée.

Dans un mode de réalisation particulier, l'invention permet d'analyser plusieurs contraintes en parallèle. Ainsi, on obtient une fréquence de calibrage lorsqu'une ou plusieurs de ces contraintes ne sont pas vérifiées.

Dans un exemple de réalisation, les contraintes sont distinctes.

Dans un mode de réalisation particulier, l'étape c) de détection consiste, par exemple, à vérifier qu'une dispersion fréquentielle est strictement supérieure à un seuil prédéterminé. Si la dispersion fréquentielle est strictement supérieure au seuil, alors on estime que la contrainte est vérifiée, sinon on estime qu'elle n'est pas vérifiée.

Avantageusement, le procédé comprend les étapes suivantes :

i) sélection d'un canal courant parmi ladite pluralité de canaux ;
ii) pour ledit canal courant, mise en oeuvre de l'étape b) d'obtention d'au moins une dispersion fréquentielle ;
iii) pour ledit canal courant, mise en oeuvre de l'étape c) de détection ; si au moins une contrainte n'est pas vérifiée, alors on effectue les étapes d) et e) d'obtention d'une sous bande de fréquence courante et d'une fréquence de calibrage ;
iv) sélection d'un canal suivant parmi ladite pluralité de canaux, ledit canal suivant devenant le canal courant avant de revenir à l'étape ii).

L'invention permet de définir dans une bande de fréquence plusieurs sous bandes, et pour chacune de ces sous bandes d'obtenir une fréquence de calibrage. Ainsi, pour une bande de fréquence donnée on optimise le nombre de fréquences de calibrage. L'invention permet donc de fournir une technique d'obtention de fréquences de calibrage qui est moins coûteuse en terme de mémoire que les techniques classiques et qui réduit les temps de calibrage de la chaîne de transmission.

Préférentiellement, le procédé comprend les étapes suivantes :

- recherche parmi les contraintes qui ne sont pas vérifiées de celle qui est la moins bien vérifiée, dite contrainte pire cas, selon un critère de comparaison déterminé ;
- obtention d'au moins une variable de sélection, en fonction de ladite contrainte pire cas.

L'invention propose de comparer les contraintes non vérifiées entre elles, de façon à déterminer la contrainte non vérifiée sur laquelle on a le pire cas.

Avantageusement, ladite étape d) d'obtention d'une sous bande de fréquence courante comprend une étape de détermination d'une fréquence de fin pour ladite sous bande de fréquence courante.

Préférentiellement, ladite étape de détermination d'une fréquence de fin comprend les étapes suivantes :

- obtention, à partir d'une première expression choisie parmi une première pluralité d'expressions en fonction de ladite au moins une variable de sélection, d'une première variable de calcul ;
- obtention, à partir d'une première extrapolation linéaire, d'au moins un premier coefficient ;
- calcul de ladite fréquence de fin, à partir de ladite première variable de calcul et dudit au moins un premier coefficient.

Avantageusement, ladite étape e) d'obtention d'une fréquence de calibrage comprend les étapes suivantes :

- obtention, à partir d'une deuxième expression choisie parmi une deuxième pluralité d'expressions en fonction de ladite au moins une variable de sélection, d'une deuxième variable de calcul ;
- obtention d'au moins un canal de calcul, par analyse d'au moins une contrainte déterminée en fonction de ladite au moins une variable de sélection ;
- obtention, à partir d'une première extrapolation linéaire et dudit au moins un canal de calcul, d'au moins un deuxième coefficient ;
- calcul de ladite fréquence de calibrage, à partir de ladite deuxième variable de calcul et dudit au moins un deuxième coefficient.

Préférentiellement, le procédé comprend en outre les étapes suivantes, pour une sous bande de fréquence suivante :

- obtention d'une fréquence de départ ;
- obtention d'au moins une valeur de puissance de sortie de l'amplificateur associée à ladite fréquence de départ.

Avantageusement, l'étape b) comprend une étape d'obtention d'au moins une première dispersion fréquentielle égale à la différence entre la valeur de puissance de sortie associée audit canal courant et la valeur de puissance de sortie associée audit canal suivant.

Dans un mode de réalisation particulier, on obtient deux premières dispersions fréquentielle, dont une est obtenue à partir de la valeur de puissance de sortie maximale $(P_{HG\ max})$ associée au canal courant et l'autre à partir de la valeur de puissance de sortie minimale $(P_{HG\ min})$ associée au canal courant.

Préférentiellement, l'amplificateur est un amplificateur de puissance à double gain, pouvant être configuré selon des première et seconde configurations de gain.

Avantageusement, l'étape b) comprend une étape d'obtention d'au moins une deuxième dispersion fréquentielle égale à la différence entre :

- une première différence de puissance égale à la différence entre :

  - une première valeur de puissance de sortie associée à ladite première configuration de gain et audit canal courant ; et
  - une deuxième valeur de puissance de sortie associée à ladite seconde configuration de gain et audit canal courant ; et

- une deuxième différence de puissance égale à la différence entre :

- une troisième valeur de puissance de sortie associée à ladite première configuration de gain et audit canal suivant ; et
- une quatrième valeur de puissance de sortie associée à ladite seconde configuration de gain et audit canal suivant.

Dans un mode de réalisation particulier, on obtient deux deuxièmes dispersions fréquentielle, dont une est obtenue à partir d'une première différence de puissance maximale ((HG-LG)max) et l'autre à partir d'une première différence de puissance minimale ((HG-LG)min).

Selon un mode de réalisation conforme à l'invention, ladite chaîne de transmission de signaux d'information est une chaîne conforme à la norme UMTS.

L'invention concerne également un produit programme d'ordinateur téléchargeable depuis un réseau de communication et/ou enregistré sur un support lisible par ordinateur et/ou exécutable par un processeur, ledit produit programme d'ordinateur comprenant des instructions de code de programme pour l'exécution des étapes du procédé d'obtention de fréquence de calibrage tel que précédemment décrit, lorsque ledit programme est exécuté sur un ordinateur.

L'invention concerne également un moyen de stockage, éventuellement totalement ou partiellement amovible, lisible par un ordinateur, stockant un jeu d'instructions exécutables par ledit ordinateur pour mettre en oeuvre le procédé d'obtention de fréquence de calibrage tel que précédemment décrit.

Dans un autre mode de réalisation, l'invention concerne un dispositif d'obtention d'au moins une fréquence de calibrage pour le calibrage d'une chaîne de transmission pouvant transmettre des signaux d'information sur une bande de fréquence comprenant une pluralité de canaux, ladite chaîne comprenant des moyens de génération d'un signal de commande, des moyens d'émission des signaux d'information commandés par ledit signal de commande et un amplificateur desdits signaux d'information, ledit amplificateur pouvant être configuré selon au moins une configuration de gain. Selon l'invention, le dispositif comprend :

- des moyens d'obtention d'au moins une valeur de puissance de sortie de l'amplificateur ;
- des moyens d'obtention d'au moins une dispersion fréquentielle, à partir de la ou des valeurs de puissance ;
- des moyens de détection permettant de détecter si au moins une contrainte liée à la ou les dispersions fréquentielles est vérifiée ;
- des moyens d'obtention d'une sous bande de fréquence courante ;
- des moyens d'obtention d'une fréquence de calibrage pour ladite sous bande de fréquence courante.

Les avantages des produit programme d'ordinateur, moyen de stockage et du dispositif de calibrage sont les mêmes que ceux du procédé d'obtention de fréquence de calibrage précité, ils ne sont pas détaillés plus amplement.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un schéma simplifié d'une chaîne de transmission classique comprenant un amplificateur de puissance;
- la figure 2 présente un schéma simplifié d'une chaîne de transmission UMTS comprenant un amplificateur de puissance à double gain pour laquelle peut être mis en oeuvre le procédé d'obtention de fréquences de calibrage selon un mode de réalisation particulier de l'invention ;
- la figure 3 présente les étapes principales d'un procédé d'obtention de fréquences de calibrage pour le calibrage de la chaîne de transmission de la figure 2 selon un mode de réalisation particulier de l'invention ;
- la figure 4 présente un schéma simplifié d'un dispositif d'obtention de fréquences de calibrage conforme à un mode de mise en oeuvre particulier de l'invention.

## 6. Description détaillée

Par souci de simplification de la description, on se limitera, dans toute la suite de ce document, à décrire le cas particulier où la chaîne de transmission est une chaîne de transmission UMTS comprenant un amplificateur de puissance à double gain. L'Homme du Métier étendra sans difficulté cet enseignement à tout autre type de chaîne de transmission comprenant un amplificateur de puissance à N gain, avec N ≥ 1.

On illustre, en relation avec la *figure 2*, un schéma simplifié d'une chaîne de transmission UMTS 200 comprenant un amplificateur de puissance à double gain pour laquelle peut être mis en oeuvre le procédé d'obtention de fréquences de calibrage selon un mode de réalisation particulier de l'invention.

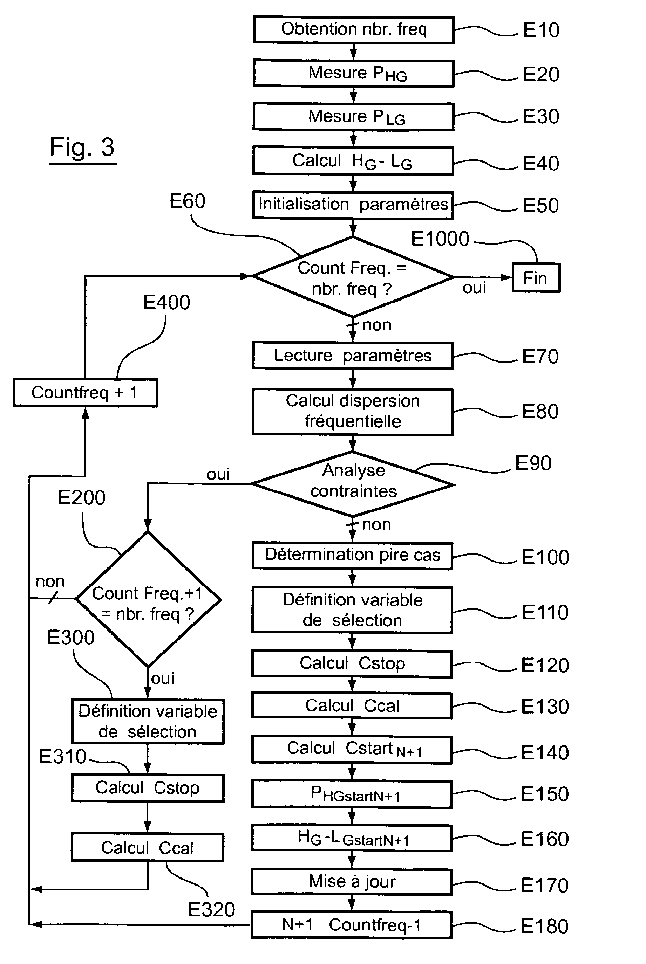

La chaîne de transmission 200 comprend un convertisseur analogique / numérique 201 (ci-après désigné par CAN 201) qui transmet un signal de commande à un émetteur 202, il commande ainsi le niveau de puissance de sortie de l'émetteur 202. L'émetteur 202 génère un signal d'information (portant l'information à émettre dans le réseau) et le transmet à une première entrée 2031 de l'amplificateur de puissance 203 afin que celui-ci amplifie, avant émission dans le réseau via une antenne (non représentée), le signal d'information. Une sortie 204 de l'amplificateur de puissance 203 est reliée à un point de calibrage 205 qui permet de mesurer la puissance de sortie de l'amplificateur de puissance 203 lors de la mise en oeuvre du procédé d'obtention de fréquences de calibrage selon l'invention ci-après décrit en relation avec la figure 3.

En outre, du fait que l'amplificateur est à double gain (peut être configuré en configuration gain faible ou en configuration gain fort), un signal de contrôle 2033, qui est un signal logique, est appliqué à une seconde entrée 2032 de l'amplificateur 203 et permet de sélectionner la configuration gain fort ou gain faible de l'amplificateur 203. Les configurations gain faible et gain fort sont liées au niveau de puissance de sortie qui est délivré en sortie de l'amplificateur de puissance 203. Par exemple, pour une puissance de sortie inférieure à 5 dBm, l'amplificateur 203 est configuré en gain faible (il présente une première valeur de gain qui est le gain faible) alors que pour une puissance de sortie supérieure à 5dBm, il est configuré en gain fort (il présente une seconde valeur de gain qui est le gain fort). Cette valeur frontière de la puissance de sortie peut évidemment changer, de manière à optimiser le rendement de la chaîne de transmission 200.

On présente, en relation avec **la *figure 3***, les étapes principales d'un procédé d'obtention de fréquences de calibrage pour le calibrage de la chaîne de transmission 200 de la figure 2 selon un mode de réalisation particulier de l'invention. Par exemple, le procédé d'obtention de fréquences de calibrage selon un mode de réalisation particulier de l'invention est mis en oeuvre par un dispositif d'obtention de fréquences de calibrage ci-après décrit en relation avec la figure 4.

On rappelle que la chaîne de transmission peut transmettre des signaux d'information sur une bande de fréquence comprenant une pluralité de canaux.

Comme on le verra ci-après, le procédé selon un mode de réalisation particulier de l'invention permet d'obtenir, pour une bande de fréquence donnée, une ou plusieurs sous bandes de fréquence caractérisées chacune par un canal de départ (Cstart), un canal de fin (Cstop) et un canal de calibrage (Ccal) (aussi appelé fréquence de calibrage).

Lors d'une première étape E10, on définit (ou on obtient d'un utilisateur via une interface graphique ou d'une mémoire) un nombre « nbr_freq » de canaux représentatif de la variation fréquentielle de la puissance de sortie de l'amplificateur sur la bande de fréquence.

Dans l'exemple illustratif et non limitatif fourni en ***annexe 1***, on définit 13 canaux (nbr_freq = 13) parmi lesquels le canal référencé C9750 correspond à la fréquence centrale et les 12 canaux référencés C9612, C9637, C9662, C9687, C9712, C9737, C9762, C9787, C9812, C9837, C9862 et C9888 sont espacés les uns des autres d'environ 5 MHz.

Lors d'une étape E20, pour chacun des canaux définis à l'étape E10, on obtient par mesure une valeur de puissance de sortie $P_{HG}$ de l'amplificateur 203 en configuration gain fort (aussi appelée par la suite valeur de puissance haute) sur le point de calibrage 205. On note que lors de cette étape E20, on configure l'amplificateur 203 en gain fort au moyen du signal de contrôle 2033 qui est, par exemple, au niveau logique « 1 », et on commande le CAN 201 de façon à ce qu'il génère une première valeur $C_{HG}$ de signal de commande.

Dans l'exemple de l'annexe 1, pour le canal C9612 on mesure une puissance de sortie de l'amplificateur de 4.59 dBm.

Lors d'une étape E30, pour chacun des canaux définis à l'étape E10, on obtient par mesure une valeur de puissance de sortie $P_{LG}$ de l'amplificateur 203 en configuration gain faible (aussi appelée par la suite valeur de puissance basse) sur le point de calibrage 205. On note que lors de cette étape E30, on configure l'amplificateur 203 en gain faible au moyen du signal de contrôle 2033 qui est, par exemple, au niveau logique « 0 », et on commande le CAN 201 de façon à ce qu'il génère une seconde valeur $C_{LG}$ de signal de commande.

Dans un mode de réalisation particulier, les mesures des puissances haute $P_{HG}$ et basse $P_{LG}$ peuvent être réalisées avec tout type d'appareil capable de mesurer une puissance électrique (tel qu'un mesureur de puissance, un testeur dédié à l'UMTS,...).

Préférentiellement, les valeurs mesurées de puissance haute $P_{HG}$ et basse $P_{LG}$ sont rapatriées dans une mémoire 41 du dispositif d'obtention de fréquences de calibrage ci-après décrit en relation avec la figure 4.

Lors d'une étape E40, pour chacun des canaux définis à l'étape E10, on calcule une différence de puissance HG-LG égale à la différence entre les valeurs de puissance haute $P_{HG}$ et basse $P_{LG}$ mesurées aux étapes E20 et E30.

Dans l'exemple de l'annexe 1, pour le canal C9612 on obtient une différence de puissance de -0.99 dB.

Lors d'une étape E50, on initialise les paramètres suivants :

- le paramètre N correspond au numéro de la sous bande de fréquence étudiée. Au démarrage, N=1 ;

- le paramètre Cstart correspond au canal de départ de la Nième sous bande de fréquence étudiée. Au démarrage, le canal de départ de la première (N=1) sous bande de fréquence étudiée est égal au premier canal défini à l'étape E10. Dans l'exemple de l'annexe 1, au démarrage, Cstart= C9612 ;
- le paramètre correspond à la puissance haute de l'amplificateur pour le canal de départ Cstart. Dans l'exemple de l'annexe 1, au démarrage, $P_{HGCstart}$ = 4,59 dBm ;
- le paramètre HG-LG$_{Cstan}$ correspond à la différence de puissance pour le canal de départ Cstart. Dans l'exemple de l'annexe 1, au démarrage, HG-LG$_{Cstart}$= -0,99 dB;
- le paramètre CountFreq correspond à la valeur d'un compteur de fréquence. Au démarrage, CountFreq =1. Comme on le verra ci-après, ce paramètre CountFreq est également utilisé comme indice de canal C$_{CountFreq}$. Par exemple, lorsque CountFreq=4, cela signifie que le canal concerné est le quatrième canal défini à l'étape E10 ;
- le paramètre (HG-LG)min correspond à une valeur minimale de différence de puissance. Au démarrage, (HG-LG) min= HG-LG$_{Cstart}$;
- le paramètre (HG-LG)max correspond à une valeur maximale de différence de puissance. Au démarrage, (HG-LG) max = HG-LG$_{Cstart}$;
- le paramètre $P_{HG\ min}$ correspond à une valeur minimale de puissance haute. Au démarrage, $P_{HG\ min}$ = $P_{HC-Cstart}$ ;
- le paramètre $P_{HG\ max}$ correspond à une valeur maximale de puissance haute. Au démarrage, $P_{HG\ max}$ = $P_{HG-Cstart}$.

Préférentiellement, les paramètres décrits ci-dessus sont stockés dans la mémoire 41 du dispositif d'obtention de fréquences de calibrage (cf. figure 4).

Lors d'une étape E60, on vérifie si le paramètre CountFreq est égal ou non au nombre nbr_freq défini à l'étape E10. Si le paramètre CountFreq est égal au nombre nbr_freq, alors on passe à une étape E1000 qui marque la fin du procédé, sinon on passe à une étape E70.

Lors de l'étape E70, on lit les paramètres (HG-LG)min, (HG-LG)max, $P_{HGmin}$ et $P_{HG\ max}$ qui sont, par exemple, stockés dans la mémoire 41 du dispositif d'obtention de fréquences de calibrage.

Lors d'une étape E80, on calcule des premières $\Delta P_{HG\ min}$ et $\Delta P_{HG\ max}$ et secondes $\Delta(HG-LG)min$ et $\Delta(HG-LG)$ max dispersions fréquentielle au moyen des expressions suivantes :

- 
$$\Delta P_{HG\ min} = P_{HG\ min} - P_{HG\ CountFreq+1} ;$$

- 
$$\Delta P_{HG\ max} = P_{HG\ max} - P_{HG\ CountFreq+1} ;$$

- 
$$\Delta(HG-LG)min = (HG-LG)min - (HG-LG)_{CountFreq+1} ;$$

- 
$$\Delta(HG-LG)max = (HG-LG)max - (HG-LG)_{CountFreq+1} ;$$

où

- $P_{HG\ min}$ est la valeur minimale de puissance haute obtenue à l'étape E70 ;
- $P_{HG\ max}$ est la valeur maximale de puissance haute obtenue à l'étape E70 ;
- $P_{HG\ CountFreq+1}$ est la valeur de puissance haute mesurée pour le canal C$_{CountFreq+1}$ (aussi appelé canal suivant) ;
- (HG-LG)min est la valeur minimale de différence de puissance obtenue à l'étape E70;
- (HG-LG)max est la valeur maximale de différence de puissance obtenue à l'étape E70 ; et
- (HG-LG)$_{CountFreq+1}$ est la différence de puissance calculée pour le canal C$_{CountFreq+1}$.

On rappelle que la norme 3GPP impose les deux contraintes suivantes :

- la différence de niveau entre deux puissances consécutives (pour une fréquence donnée) doit être de 1 $\pm$ 0.5 dB ; et
- la dispersion de la puissance de sortie maximale doit être de +1 / -3 dB autour de +24dBm.

Ainsi, pour garantir la norme 3GPP les premières et secondes dispersions fréquentielle (calculées à l'étape E80) doivent respecter les contraintes suivantes :

a)

$$\Delta P_{HG\ min} > - C_P\ ;$$

b)

$$\Delta P_{HG\ max} < + C_P\ ;$$

c)

$$\Delta(HG\text{-}LG)min > - C_\Delta\ ;$$

d)

$$\Delta(HG\text{-}LG)max < + C_\Delta.$$

Dans l'exemple de l'annexe 1, la consigne $C_P$ est fixée à 1 dB et la consigne $C_\Delta$ à 0,5 dB.

Lors d'une étape E90, on analyse les quatre contraintes a), b), c) et d) définies ci-dessus. Si au moins une de ces contraintes n'est pas respectée alors on détecte un calibrage à effectuer et on passe à une étape E100. En revanche, si toutes les contraintes sont respectées alors aucun calibrage n'est à effectuer et on passe à une étape E200.

Lors de l'étape E100, on détermine parmi les contraintes non-respectées (déterminées à l'étape E90) celle qui a été la moins bien respectée (appelée ci-après contrainte pire cas). Ainsi, on réalise une comparaison entre les contraintes non-respectées. Il est important de noter que cette comparaison doit être faite de manière homogène puisque certaines contraintes sont exprimées en dB et d'autres en dBm. Il est donc nécessaire d'en normaliser une par rapport à l'autre.

Lors d'une étape E110, on définit deux variables de sélection. La première variable « CONTRAINT » indique lequel des paramètres $P_{HG}$ ou HG-LG a causé la contrainte pire cas (déterminée à l'étape E100), et la deuxième variable « VALEUR » précise si c'est la valeur minimale (min) ou maximale (max) de la première variable CONTRAINT qui a causé la contrainte pire cas (déterminée à l'étape E100). Ainsi :

- si la contrainte a) est la contrainte pire cas, alors CONTRAINT = $P_{HG}$ et VALEUR = min ;
- si la contrainte b) est la contrainte pire cas, alors CONTRAINT = $P_{HG}$ et VALEUR = max ;
- si la contrainte c) est la contrainte pire cas, alors CONTRAINT = (HG-LG) et VALEUR = min ;
- si la contrainte d) est la contrainte pire cas, alors CONTRAINT = (HG-LG) et VALEUR = max.

Lors d'une étape E120, on détermine le canal de fin $Cstop_N$ de la Nième sous bande de fréquence étudiée. A cette étape E120, on note que le canal d'indice CountFreq+1 n'est pas le dernier canal des canaux définis à l'étape E10. De ce fait, le canal de fin $Cstop_N$ se situe entre les deux derniers canaux étudiés :

$$C_{CountFreq} < Cstop_N < C_{CountFreq+1}$$

Dans un mode de réalisation particulier, pour déterminer le canal de fin $Cstop_N$ on effectue une extrapolation linéaire. Ainsi, on détermine le coefficient directeur « a » et l'ordonnée à l'origine « b » de l'expression suivante :

$$y = a * x + b$$

où
la variable « x » correspond à un canal ; et
la variable « y » correspond à la puissance haute mesurée ($P_{HG}$) ou à la différence de puissance calculée (HG-LG) pour ce canal. Le choix entre la puissance haute et la différence de puissance est fonction de la variable CONTRAINT

déterminée à l'étape E110. Plus précisément :

- si CONTRAINT = $P_{HG}$, alors « y » représente une puissance haute ;
- si CONTRAINT = (HG-LG), alors « y » représente une différence de puissance.

Dans le cadre de cette extrapolation linéaire, les coefficients a et b sont obtenus au moyen des expressions suivantes :

- si CONTRAINT = $P_{HG}$, alors :

  -

$$a = (P_{HG\ CountFreq+1} - P_{HG\ CountFreq}) / (C_{CountFreq+1} - C_{CountFreq})\ ;$$

  -

$$b = P_{HG\ CountFreq} - a * C_{CountFreq}\ ;$$

- si CONTRAINT = (HG-LG), alors :

  -

$$a = ((HG\text{-}LG)_{CountFreq+1} - (HG\text{-}LG)_{CountFreq}) / (C_{CountFreq+1} - C_{CountFreq})\ ;$$

  -

$$b = (HG\text{-}LG)_{CountFreq} - a * C_{CountFreq}.$$

Puis, on calcule une variable $CONTRAINT_{Cstop}$ au moyen d'une expression choisie en fonction des variables CONTRAINT et VALEUR (déterminées à l'étape E110). Plus précisément :

-

$$\text{si CONTRAINT} = P_{HG}\ \text{et VALEUR} = \min,\ \text{alors :}$$
$$CONTRAINT_{Cstop} = P_{HG\ CstopN} = P_{HG\ min} + C_P\ ;$$

-

$$\text{si CONTRAINT} = P_{HG}\ \text{et VALEUR} = \max,\ \text{alors :}$$
$$CONTRAINT_{Cstop} = P_{HG\ CstopN} = P_{HG\ max} - C_P\ ;$$

-

$$\text{si CONTRAINT} = (HG\text{-}LG)\ \text{et VALEUR} = \min,\ \text{alors :}$$

$$CONTRAINT_{Cstop} = (HG\text{-}LG)_{CstopN} = (HG\text{-}LG)min + C_\Delta\ ;$$

-

$$\text{si CONTRAINT} = (HG\text{-}LG)\ \text{et VALEUR} = \max,\ \text{alors :}$$
$$CONTRAINT_{Cstop} = (HG\text{-}LG)_{CstopN} = (HG\text{-}LG)max - C_\Delta.$$

Enfin, on calcule le canal de fin $Cstop_N$ de la Nième sous bande de fréquence étudiée au moyen de l'expression suivante :

$$Cstop_N = ARRONDI \left[ (CONTRAINT_{Cstop} - b) / a \right].$$

Lors d'une étape E130, on détermine le canal de calibrage $Ccal_N$ de la Nième sous bande de fréquence étudiée.

Dans un premier temps, on calcule une variable $CONTRAINT_{Ccal}$ au moyen d'une expression choisie en fonction des variables CONTRAINT et VALEUR (déterminées à l'étape E110). Plus précisément :

- si CONTRAINT = $P_{HG}$ et VALEUR = min, alors :

$$CONTRAINT_{Ccal} = P_{HG\ CcalN} = P_{HG\ min} + C_P / 2 \ ;$$

- si CONTRAINT = $P_{HG}$ et VALEUR = max, alors :

$$CONTRAINT_{Ccal} = P_{HG\ CcalN} = P_{HG\ max} - C_P / 2 ;$$

- si CONTRAINT = (HG-LG) et VALEUR = min, alors :

$$CONTRAINT_{Ccal} = (HG\text{-}LG)_{CcalN} = (HG\text{-}LG)min + C_\Delta / 2 ;$$

- si CONTRAINT = (HG-LG) et VALEUR = max, alors :

$$CONTRAINT_{Ccal} = (HG\text{-}LG)_{CcalN} = (HG\text{-}LG)max - C_\Delta / 2.$$

Ensuite, on détermine parmi les canaux définis à l'étape E10 les deux canaux consécutifs $C_i$ et $C_{i-1}$ qui permettent de vérifier les contraintes suivantes :

- si CONTRAINT = $P_{HG}$, alors les contraintes à vérifier sont :

$$P_{HG\ Ci-1} < P_{HG\ Ccal} < P_{HG\ Ci} ;$$

ou

$$P_{HG\ Ci-1} > P_{HG\ Ccal} > P_{HG\ Ci}$$

- si CONTRAINT = (HG-LG), alors les contraintes à vérifier sont :

$$(HG\text{-}LG)_{Ci-1} < (HG\text{-}LG)_{Ccal} < (HG\text{-}LG)_{Ci} ;$$

ou

$$(HG\text{-}LG)_{Ci-1} > (HG\text{-}LG)_{Ccal} > (HG\text{-}LG)_{Ci}$$

Puis, on effectue une extrapolation linéaire pour déterminer le coefficient directeur « a » et l'ordonnée à l'origine « b » de l'expression suivante :

$$y = a * x + b$$

où
la variable « x » correspond à un canal ; et
la variable « y » correspond à la puissance haute mesurée ($P_{HG}$) ou à la différence de puissance calculée (HG-LG) pour ce canal. Le choix entre la puissance haute et la différence de puissance est fonction de la variable CONTRAINT déterminée à l'étape E110.

Dans le cadre de cette extrapolation linéaire, les coefficients a et b sont obtenus au moyen des expressions suivantes :

- si CONTRAINT = $P_{HG}$, alors :

-
$$a = (P_{HG\,Ci} - P_{HG\,Ci\text{-}1}) / (C_i - C_{i\text{-}1})\;;$$

-
$$b = P_{HG\,Ci} - a * C_i\;;$$

- si CONTRAINT = (HG-LG), alors :

-
$$a = ((HG\text{-}LG)_{Ci} - (HG\text{-}LG)_{Ci\text{-}1}) / (C_i - C_{i\text{-}1})\;;$$

-
$$b = (HG\text{-}LG)_{Ci} - a * C_i\;;$$

Enfin, on calcule le canal de calibrage $Ccal_N$ de la Nième sous bande de fréquence étudiée au moyen de l'expression suivante :

$$Ccal_N = ARRONDI\,[\,(CONTRAINT_{Ccal} - b\,)\,/\,a\,].$$

Lors d'une étape E140, on détermine le canal de départ $Cstart_{N+1}$ de la (N+1)ième sous bande de fréquence, en d'autres termes on détermine le canal de départ de la sous bande suivante. Dans un mode de réalisation particulier, le canal de départ de la sous bande suivante $Cstart_{N+1}$ suit le canal de fin de la sous bande courante $Cstop_N$. On calcule donc le canal de départ $Cstart_{N+1}$ de la (N+1)ième sous bande de fréquence au moyen de l'expression suivante :

$$C_{start\,N+1} = C_{stop\,N} + 1.$$

Lors d'une étape E150, on détermine la puissance haute $P_{HG\text{-}start\,N+1}$ pour le canal de départ $Cstart_{N+1}$ obtenu à l'étape E140.

Dans un premier temps, on détermine les deux puissances haute qui permettent de vérifier les contraintes suivantes :

-
$$P_{HG\,CCountFreq} < P_{HG\,Cstart\,N+1} < P_{HG\,CCountFreq+1}\;;$$

ou
-
$$P_{HG\,CCountFreq} > P_{HG\,Cstart\,N+1} > P_{HG\,CCountFreq+1}.$$

Puis, on effectue une extrapolation linéaire pour déterminer le coefficient directeur « a » et l'ordonnée à l'origine « b » de l'expression suivante :

$$y = a * x + b$$

où
la variable « x » correspond à un canal ; et
la variable « y » correspond à la puissance haute de ce canal.

Dans le cadre de cette extrapolation linéaire, les coefficients a et b sont obtenus au moyen des expressions suivantes :

- 

$$a = (P_{HG\text{-}CCountFreq+1} - P_{HG\text{-}CCountFreq}) / (C_{CountFreq+1} - C_{CountFreq}) ;$$

- 

$$b = P_{HG\text{-}CCountFreq} - a * C_{CountFreq}.$$

Enfin, on calcule la puissance haute $P_{HG\text{-}Cstart\ N+1}$ au moyen de l'expression suivante :

$$P_{HG\text{-}Cstart\ N+1} = a * Cstart + b.$$

Lors d'une étape E160, on détermine la différence de puissance $(HG\text{-}LG)_{Cstart\ N+1}$ pour le canal de départ $Cstart_{N+1}$ obtenu à l'étape E140.

Dans un premier temps, on détermine les deux différences de puissance qui permettent de vérifier les contraintes suivantes :

- 

$$(HG\text{-}LG)_{CCountFreq} < (HG\text{-}LG)_{Cstart\ N+1} < (HG\text{-}LG)_{CCountFreq+1} ;$$

ou

- 

$$(HG\text{-}LG)_{CCountFreq} > (HG\text{-}LG)_{Cstart\ N+1} > (HG\text{-}LG)_{CCountFreq+1}.$$

Puis, on effectue une extrapolation linéaire pour déterminer le coefficient directeur « a » et l'ordonnée à l'origine « b » de l'expression suivante :

$$y = a * x + b$$

où
la variable « x » correspond à un canal ; et
la variable « y » correspond à la différence de puissance de ce canal.

Dans le cadre de cette extrapolation linéaire, les coefficients a et b sont obtenus au moyen des expressions suivantes :

- 

$$a = ((HG\text{-}LG)_{CCountFreq+1} - (HG\text{-}LG)_{CCountFreq}) / (C_{CountFreq+1} - C_{CountFreq}) ;$$

- 

$$b = (HG\text{-}LG)_{CCountFreq} - a * C_{CountFreq} ;$$

Enfin, on calcule la différence de puissance $(HG\text{-}LG)_{Cstart\ N+1}$ au moyen de l'expression suivante :

$$(HG\text{-}LG)_{Cstart\ N+1} = a * Cstart_{N+1} + b.$$

Lors d'une étape E170, on effectue les mises à jour suivantes :

-

$$C_{CountFreq} = C_{start\ N+1}\ ;$$

-

$$(HG\text{-}LG)_{CCountFreq} = (HG\text{-}LG)_{Cstart\ N+1}\ ;$$

-

$$P_{HG\ CCountFreq} = P_{HG\ Cstart\ N+1}\ ;$$

-

$$(HG\text{-}LG)min = (HG\text{-}LG)max = (HG\text{-}LG)_{Cstart\ N+1}\ ;$$

et

-

$$P_{HG\ min} = P_{HG\ max} = P_{HG\ Cstart\ N+1}.$$

Lors d'une étape E180, on incrémente d'une unité le paramètre N, et on décrémente d'une unité le paramètre CountFreq. Puis, on passe à une étape E400.

Lors de l'étape E200, on vérifie si le paramètre CountFreq+1 est égal ou non au nombre nbr_freq défini à l'étape E10. Si le paramètre CountFreq+1 est égal au nombre nbr_freq, alors on passe à une étape E300, sinon on passe à l'étape E400.

Lors de l'étape E300, on détermine parmi les contraintes non-respectées (déterminées à l'étape E90) celle qui a été la moins bien respectée (contrainte pire cas). Ainsi, on réalise une comparaison entre les contraintes non-respectées. Il est important de noter que cette comparaison doit être faite de manière homogène puisque certaines contraintes sont exprimées en dB et d'autres en dBm. Il est donc nécessaire d'en normaliser une par rapport à l'autre.

Lors d'une étape E310, on définit deux variables de sélection. La première variable « CONTRAINT » indique lequel des paramètres $P_{HG}$ ou HG-LG a causé la contrainte pire cas (déterminée à l'étape E300), et la deuxième variable « VALEUR » précise si c'est la valeur minimale (min) ou maximale (max) de la première variable CONTRAINT qui a causé la contrainte pire cas (déterminée à l'étape E300). Ainsi :

- si la contrainte a) est la contrainte pire cas, alors CONTRAINT = $P_{HG}$ et VALEUR = min ;
- si la contrainte b) est la contrainte pire cas, alors CONTRAINT = $P_{HG}$ et VALEUR = max ;
- si la contrainte c) est la contrainte pire cas, alors CONTRAINT = (HG-LG) et VALEUR = min ;
- si la contrainte d) est la contrainte pire cas, alors CONTRAINT = (HG-LG) et VALEUR = max.

Lors d'une étape E320, on détermine le canal de fin $Cstop_N$ de la Nième sous bande de fréquence étudiée. A cette étape E320, on note que le canal d'indice CountFreq+1 est le dernier canal des canaux définis à l'étape E10. De ce fait, le canal de fin $Cstop_N$ est égal au canal $C_{CountFreq+1}$.

Lors d'une étape E330, on détermine le canal de calibrage $Ccal_N$ de la Nième sous bande de fréquence étudiée.

Dans un premier temps, on obtient une variable CONTRAINT$_{Ccal}$ au moyen d'une expression choisie en fonction de la variable CONTRAINT (déterminée à l'étape E310). Plus précisément :

-

$$\text{si CONTRAINT} = P_{HG}, \text{ alors :}$$

$$CONTRAINT_{Ccal} = P_{HG\ CcalN} = (P_{HG\ max} + P_{HG\ min})\,/\,2\ ;$$

- si CONTRAINT = (HG-LG), alors :

$$\text{CONTRAINT}_{Ccal} = (HG\text{-}LG)_{CcalN} = ((HG\text{-}LG)max + (HG\text{-}LG)min) /$$

Ensuite, on détermine parmi les canaux définis à l'étape E10 les deux canaux consécutifs $C_i$ et $C_{i-1}$, qui permettent de vérifier les contraintes suivantes :

- si CONTRAINT = $P_{HG}$, alors les contraintes à vérifier sont :

$$P_{HG\,Ci-1} < P_{HG\,Ccal} < P_{HG\,Ci}\;;$$

ou

$$P_{HG\,Ci-1} > P_{HG\,Ccal} > P_{HG\,Ci}$$

- si CONTRAINT = (HG-LG), alors les contraintes à vérifier sont :

$$(HG\text{-}LG)_{Ci-1} < (HG\text{-}LG)_{Ccal} < (HG\text{-}LG)_{Ci}\;;$$

ou

$$(HG\text{-}LG)_{Ci-1} > (HG\text{-}LG)_{Ccal} > (HG\text{-}LG)_{Ci}$$

Puis, on effectue une extrapolation linéaire pour déterminer le coefficient directeur « a » et l'ordonnée à l'origine « b » de l'expression suivante :

$$y = a * x + b$$

où
la variable « x » correspond à un canal ; et
la variable « y » correspond à la puissance haute mesurée ($P_{HG}$) ou à la différence de puissance calculée (HG-LG) pour ce canal. Le choix entre la puissance haute et la différence de puissance est fonction de la variable CONTRAINT déterminée à l'étape E110.
Dans le cadre de cette extrapolation linéaire, les coefficients a et b sont obtenus au moyen des expressions suivantes :

- si CONTRAINT = $P_{HG}$, alors :

$$a = (P_{HG\,Ci} - P_{HG\,Ci-1}) / (C_i - C_{i-1})\;;$$

$$b = P_{HG\,Ci} - a * C_i\;;$$

- si CONTRAINT = (HG-LG), alors :

$$a = ((HG\text{-}LG)_{Ci} - (HG\text{-}LG)_{Ci-1}) / (C_i - C_{i-1})\;;$$

-

$$b = (HG\text{-}LG)_{Ci} - a * C_i ;$$

Enfin, on calcule le canal de calibrage $Ccal_N$ de la Nième sous bande de fréquence étudiée au moyen de l'expression suivante :

$$Ccal_N = ARRONDI\ [\ (CONTRAINT_{Ccal} - b\ )\ /\ a\ ].$$

Puis, on passe à l'étape E400.

Lors de l'étape E400, on incrémente d'une unité le paramètre CountFreq. Puis, on retourne à l'étape E60.

**La *figure 4*** présente un schéma simplifié d'un dispositif d'obtention de fréquences de calibrage conforme à un mode de mise en oeuvre particulier de l'invention, qui comprend une mémoire M 41 (par exemple une mémoire RAM), une unité de traitement P 40, équipée par exemple d'un microprocesseur, et pilotée par le programme d'ordinateur (ou application) Pg 42 mettant en oeuvre certaines étapes du procédé selon l'invention décrites à la figure 3.

A l'initialisation, les instructions de code du programme d'ordinateur 42 sont par exemple chargées dans la mémoire RAM 41 avant d'être exécutées par le microprocesseur de l'unité de traitement 40. L'unité de traitement 40 obtient un relevé de la réponse en fréquence de la chaîne de transmission 200, c'est-à-dire les valeurs mesurées de la puissance de sortie de l'amplificateur en configuration gain fort $P_{HG}$ et gain faible $P_{LG}$ Le microprocesseur de l'unité de traitement 40 traite ces valeurs mesurées, selon les instructions de code du programme d'ordinateur 42, et délivre en sortie les fréquences de calibrage $Ccal_N$ pour lesquelles un calibrage est à effectuer.

**Annexe 1**

**Exemple de détermination de sous bande de fréquence et de fréquences de calibrage**

**1. Mesure des puissance et initialisation des paramètres**

Les paramètres initiaux sont les suivants.

- nbr_freq = 13 et les canaux utilisés sont les suivants :
- 12 canaux espacés d'environ 5 MHz chacun : C9612, C9637, C9662, C9687, C9712, C9737, C9762, C9787, C9812, C9837, C9862, C9888
- 1 canal qui correspond à la fréquence centrale: C9750

Bien entendu, dans un autre exemple le nombre de canaux et leur distribution dans la bande de fréquence peuvent évoluer.

Les résultats de mesures nous permettant de compléter le tableau initial suivant :

| Canal | 9612 | 9637 | 9662 | 9687 | 9712 | 9737 | 9750 | 9762 | 9787 | 9812 | 9837 | 9862 | 9888 |
|-------|------|------|------|------|------|------|------|------|------|------|------|------|------|
| $P_{HG}$ | 4.59 | 4.73 | 4.96 | 5.13 | 5.16 | 5.14 | 5.2 | 5.05 | 4.81 | 4.37 | 4.05 | 3.85 | 3.74 |
| HG-LG | -0.99 | -1.01 | -0.77 | -0.32 | 0.19 | 0.53 | 0.7 | 0.74 | 0.79 | 0.67 | 0.66 | 0.62 | 0.64 |

On initialise les paramètres suivants :

N=1
Cstart=C9612
$P_{HG-Cstart}$ = 4.59 dBm
$HG-LG_{Cstart}$ = -0.99 dB
CountFreq = 1 (HG-LG)min = (HG-LG)max = (HG-LG)$_{Cstart}$ = (HG-LG)$_{C9612}$ = -0.99 dB
$P_{HG\ min}$ = $P_{HG\ max}$ = $P_{HG\ Cstart}$ = $P_{HG-C9612}$ = 4.59 dBm

**2. Détermination de BW1(première bande de fréquence)**

2.1.1 Vérification dernier canal

$$[(CountFreq) = 1] \neq [nbr\_freq = 13],$$

d'où:

2.1.2 Détermination des paramètres (HG-LG)min ; (HG-LG)max ; $P_{HG\ min}$ et $P_{HGmax}$

Nous comparons les valeurs de $P_{HG}$ et (HG-LG) à l'indice du canal C9637 par rapport aux précédentes valeurs minimales et maximales. D'où :

(HG-LG)max = HG-LG$_{C9637}$ = -0.99 dB
(HG-LG)min = HG-LG$_{C9612}$ = -1.01dB
$P_{HG\ max}$ = $P_{HG-C9613}$ = 4.73 dBm
$P_{HG\ min}$ = $P_{HG-C9637}$ = 4.59 dBm

2.1.3 Vérification des contraintes

Le test des contraintes donne le résultat suivant :

$$\Delta(HG-LG)max = (HG-LG)max - (HG-LG)_{C9637} = -0.99 - (-1.01) = 0.02 < + C_\Delta$$

$$\Delta(HG-LG)min = (HG-LG)min - (HG-LG)_{C9637} = -0.99 - (-1.01) = 0.02 > - C_\Delta$$

$$\Delta P_{HG\ max} = P_{HG\ max} - P_{HG-C9637} = 4.59 - 4.73 = -0.14 < + C_P$$

$$\Delta P_{HG\ min} = P_{HG\ min} - P_{HG-C9637} = 4.59 - 4.73 = -0.14 > - C_P$$

Donc, toutes les contraintes sont tenues.
Or: [(CountFreq + 1) = 2] $\neq$ [nbr_freq = 13], d'où:
CouniFreq = 2

2.2.1 Vérification dernier canal

[(CountFreq) = 2] $\neq$ [nbr-freq = 13], d'où:

2.2.2 Détermination des paramètres (HG-LG)min ; (HG-LG)max ; $P_{HGmin}$ et $P_{HGmax}$

Nous comparons les valeurs de $P_{HG}$ et (HG-LG) à l'indice du canal C9662 par rapport aux précédentes valeurs minimales et maximales. D'où :

(HG-LG)max = -0.77 dB
(HG-LG)min = -1.01dB
$P_{HG\ max}$ = 4.96 dBm
$P_{HG\ min}$ = 4.59 dBm

### 2.2.3 Vérification des contraintes

Le test des contraintes donne le résultat suivant :

$$\Delta(HG\text{-}LG)max = (HG\text{-}LG)max - (HG\text{-}LG)_{C9662} = -0.99 - (-0.77) = -0.22 < + C_{\Delta}$$

$$\Delta(HG\text{-}LG)min = (HG\text{-}LG)min - (HG\text{-}LG)_{C9662} = -1.01 - (-0.77) = -0.24 > - C_{\Delta}$$

$$\Delta P_{HG\ max} = P_{HG\ max} - P_{HG\text{-}C9662} = 4.73 - 4.96 = -0.23 < + C_P$$

$$\Delta P_{HG\ min} = P_{HG\ min} - P_{HG\text{-}C9662} = 4.59 - 4.96 = -0.37 > - C_P$$

Donc, toutes les contraintes sont tenues.
Or: [(CountFreq + 1) = 3] ≠ [nbr_freq = 13], d'où:
CountFreq = 3

### 2.3.1 Vérification dernier canal

$$[(CountFreq) = 3] \neq [nbr\_freq = 13],$$

d'où:

### 2.3.2 Détermination des paramètres (HG-LG)min : (HG-LG)max ; PHG min et $P_{HG\ max}$

Nous comparons les valeurs de $P_{HG}$ et (HG-LG) à l'indice du canal C9687 par rapport aux précédentes valeurs minimales et maximales. D'où :

(HG-LG)max = -0.32 dB
(HG-LG)min = -1.01dB
$P_{HG\ max}$ = 5.13 dBm
$P_{HG\ min}$ = 4.59 dBm

### 2.33 Vérification des contraintes

Le test des contraintes donne le résultat suivant :

$$\Delta(HG\text{-}LG)max = (HG\text{-}LG)max - (HG\text{-}LG)_{C9687} = -0.77 - (-0.32) = -0.45 < + C_{\Delta}$$

$$\Delta(HG\text{-}LG)min = (HG\text{-}LG)min - (HG\text{-}LG)_{C9687} = -1.01 - (-0.32) = -0.69 < - C_{\Delta}$$

$$\Delta P_{HG\ max} = P_{HG\ max} - P_{HG\text{-}C9698} = 4.96 - 5.13 = -0.17 < + C_P$$

$$\Delta P_{HG\ min} = P_{HG\ min} - P_{HG\text{-}C9698} = 4.59 - 5.13 = -0.54 > - C_P$$

Une contrainte n'est pas tenue.

2.3.4 Recherche de la contrainte pire cas

Dans ce cas, une seule contrainte n'est pas tenue avec le paramètre (HCG-LG)min et la variable CONTRAINT est la différence (HG-LG).

2.3.5 Détermination du canal de fin CstopN

On a obligatoirement :

C9662 < Cstop$_N$ < C9687

Pour le déterminer, nous allons utiliser une extrapolation linéaire. La loi est y = a * x + b.
Les abscisses « x » sont représentées par les canaux (ici C9662 et C9687) et les ordonnées « y » par les paramètres responsables de la contrainte tenue (ici, les valeurs de (HG - LG)).
On détermine les coefficient « a » et « b » :

$$a = ((HG\text{-}LG)_{C9687} - (HG\text{-}LG)_{C9662}) / ( C9687 - C9662 )$$

$$a = (-0.32 - (-0.77)) / (9687\text{-}9662)$$

$$a = 0.018$$

$$b = (HG\text{-}LG)_{C9687} - a * C9687$$

$$b = -0.32 - 0.018 * 9687$$

$$b = -174.686$$

D'où:

$$y = 0.018 * x - 174.686$$

Or, le canal STOP est celui pour lequel on a :

$$y = (HG\text{-}LG)min + C_\Delta = -1.01 + 0.5 = -0.51$$

On en déduit le canal associé :

$$x = ( y - (-174.686) ) / 0.018$$

$$x = ( -0.51 + 174.686 ) / 0.018$$

$$x = 9676.444$$

Le canal STOP est donc :

$Cstop_N$ = ARRONDI $(x)$
$Cstop_N$ = C9676

La première sous bande est donc définie comme suit :

BW 1 = (C9612, C9676, Ccal)

2.3.6 Détermination du canal de calibrage $Ccal_N$

Le canal de calibrage est celui Pour lequel on a :

$$(HG\text{-}LG)_{Ccal\ N} = (HG\text{-}LG)min + C_\Delta / 2 = -1.01 + 0.25 = -0.76\ dB$$

Or,

$$(HG\text{-}LG)_{C9662} < (HG\text{-}LG)_{Ccal\ N} < (HG\text{-}LG)_{C9687}$$

Donc, les deux canaux consécutifs ($C_i$ et $C_{i-1}$,) du tableau initial sont :

$C_{i-1}$ = C9662 et
$C_i$ = C9687

Nous utilisons alors une extrapolation linéaire de loi : $y = a * x + b$.
Les abscisses « x » sont représentées par les canaux (C9662 et C9687) et les ordonnées « y » par les paramètres responsables de la contrainte tenue (ici, les valeurs de (HG - LG)).
Dans notre cas, la loi linéaire sera la même que celle du paragraphe précédent puisque obtenue avec les même canaux C9662 et C9687.
De ce fait, on en déduit le canal :

$$x = ( y - (-174.686) ) / 0.018 \qquad (\text{« y » représente } (HG\text{-}LG)_{Ccal} \text{ et « x » les canaux})$$

$$x = ( -0.76 + 174.686 ) / 0.018$$

$$x = 9662.555$$

Le canal de calibrage est donc :

$Ccal_N$ = ARRONDI $(x)$
$Ccal_N$ = C9662

Nous obtenons donc le triplet correspondant à la première sous bande :

BW1 = (Cstart, Cstop, Ccal) = (C9612, C9676, C9662)

2.3.7 Détermination des paramètres Cstat$_{N+1}$, P$_{HG-CstartN+1}$ , (HG-LG)$_{CstartN+}$

23.7.1 Calcul de Cstart$_{N+1}$:

Le canal START de la nouvelle sous bande suit le canal STOP de la sous bande précédente.
D'où :

$$C_{start\ N+1} = C_{stop\ N} + 1 = C9676 + 1 = C9677$$

2.3.7.2 Calcul de P$_{Hg-Cstart\ N+1}$:

Ona:

$$P_{HG-C9662} < P_{HG-Cstart\ N+1} < P_{HG-C9687}$$

Pour la déterminer, nous allons utiliser une extrapolation linéaire. La loi est y = a * x + b.
Les abscisses « x » sont représentées par les canaux (ici C9662 et C9687) et les ordonnées « y » par les puissances gain fort associées (P$_{HG-C9662}$ et P$_{HG-C9687}$).
On détermine les coefficients « a » et « b » :

$$a = (P_{HG-C9687}\ et\ P_{HG-C9662}) / (\ 9687 - 9662\ )$$

$$a = (5.13 - 4.96) / (9687 - 9662)$$

$$a = 0.0068$$

$$b = P_{HG-C9687} - a * 9687$$

$$b = 5.13 - 0.0068 * 9687$$

$$b = -60.7416$$

D'où:

$$y = 0.0068 * x - 60.7416$$

On en déduit ainsi la puissance gain fort sur ce canal START :

$$P_{HG-Cstart\ N+1} = a * Cstart_{N+1} + b$$

$$P_{HG-\ Cstart\ N+1} = 0.0068 * Cstart_{N+1} - 60.7416$$

$$P_{HG-\ Cstart\ N+1} = 0.0068 * 9677 - 60.7416$$

$$P_{HG\text{-}Cstart\ N+1} = 5.062\ dBm$$

2.3.7.3 Calcul de $(HG\text{-}LG)_{Cstart\ N+1}$ :

On a :

$$(HG\text{-}LG)_{C9662} < (HG\text{-}LG)_{Cstart\ N+1} < (HG\text{-}LG)_{C9687}$$

De ce fait, la loi linéaire que nous utilisons pour déterminer ce paramètre est la même que celle utilisée dans la sous bande précédente.

Ainsi, on obtient :

$$(HG\text{-}LG)_{Cstart\ N+1} = 0.018 * Cstart_{N+1} - 174.686$$

$$(HG\text{-}LG)_{Cstart\ N+1} = 0.018 * 9677 - 174.686$$

$$(HG\text{-}LG)_{Cstart\ N+1} = -0.5\ dB$$

Nous obtenons donc pour la deuxième sous bande :

$$( Cstart,\ P_{HG\text{-}Cstart}\ ,\ HG\text{-}LG_{Cstart} ) = (C9677,\ 5.062,\ -0.5)$$

2.3.7.4 Mise à jour

$$C_{CountFreq} = C9677$$

$$(HG\text{-}LG)_{CCountFreq} = -0.5\ dB$$

$$P_{HG\ CCountFreq} = 5.062\ dBm$$
$$(HG\text{-}LG)min = (HG\text{-}LG)max = (HG\text{-}LG)_{Cstart\ N+1} = (HG\text{-}LG)_{C9677} = -0.5\ dB$$

$$P_{HG\ min} = P_{HG\ max} = P_{HG\ Cstart\ N+1} = P_{HG\ C9677} = 5.062\ dBm$$

**Revendications**

1. Procédé d'obtention d'au moins une fréquence de calibrage pour le calibrage d'une chaîne de transmission pouvant transmettre des signaux d'information sur une bande de fréquence comprenant une pluralité de canaux, ladite chaîne comprenant des moyens de génération (201) d'un signal de commande, des moyens d'émission (202) des signaux d'information commandés par ledit signal de commande et un amplificateur (203) desdits signaux d'information, ledit amplificateur pouvant être configuré selon au moins une configuration de gain, **caractérisé en ce qu'**il comprend les étapes suivantes :

   a) pour chaque canal et chaque configuration de gain, obtention (E20, E30) d'une valeur de puissance de sortie de l'amplificateur ;

b) obtention (E80) d'au moins une dispersion fréquentielle, à partir desdites valeurs de puissance ;

c) pour chaque dispersion fréquentielle obtenue, détection (E90) permettant de détecter si une contrainte liée à ladite dispersion fréquentielle est vérifiée ;

si au moins une contrainte n'est pas vérifiée, alors on effectue les étapes suivantes :

d) obtention (E120) d'une sous bande de fréquence courante ;

e) obtention (E130) d'une fréquence de calibrage (Ccal) pour ladite sous bande de fréquence courante.

2. Procédé selon la revendication 1, **caractérisé en ce qu'**il comprend les étapes suivantes :

i) sélection d'un canal courant parmi ladite pluralité de canaux ;

ii) pour ledit canal courant, mise en oeuvre de l'étape b) d'obtention d'au moins une dispersion fréquentielle ;

iii) pour ledit canal courant, mise en oeuvre de l'étape c) de détection ; si au moins une contrainte n'est pas vérifiée, alors on effectue les étapes d) et e) d'obtention d'une sous bande de fréquence courante et d'une fréquence de calibrage ;

iv) sélection d'un canal suivant parmi ladite pluralité de canaux, ledit canal suivant devenant le canal courant avant de revenir à l'étape ii).

3. Procédé selon l'une quelconque des revendications 1 et 2, **caractérisé en ce qu'**il comprend les étapes suivantes :

- recherche (E100) parmi les contraintes qui ne sont pas vérifiées de celle qui est la moins bien vérifiée, dite contrainte pire cas, selon un critère de comparaison déterminé ;
- obtention (E110) d'au moins une variable de sélection, en fonction de ladite contrainte pire cas.

4. Procédé selon l'une quelconque des revendications 1 à 3, **caractérisé en ce que** ladite étape d) d'obtention d'une sous bande de fréquence courante comprend une étape de détermination (E120) d'une fréquence de fin (Cstop) pour ladite sous bande de fréquence courante.

5. Procédé selon les revendications 3 et 4, **caractérisé en ce que** ladite étape de détermination d'une fréquence de fin comprend les étapes suivantes :

- obtention, à partir d'une première expression choisie parmi une première pluralité d'expressions en fonction de ladite au moins une variable de sélection, d'une première variable de calcul ;
- obtention, à partir d'une première extrapolation linéaire, d'au moins un premier coefficient ;
- calcul de ladite fréquence de fin (Cstop), à partir de ladite première variable de calcul et dudit au moins un premier coefficient.

6. Procédé selon l'une quelconque des revendications 3 à 5, **caractérisé en ce que** ladite étape e) d'obtention d'une fréquence de calibrage (Ccal) comprend les étapes suivantes :

- obtention, à partir d'une deuxième expression choisie parmi une deuxième pluralité d'expressions en fonction de ladite au moins une variable de sélection, d'une deuxième variable de calcul ;
- obtention d'au moins un canal de calcul, par analyse d'au moins une contrainte déterminée en fonction de ladite au moins une variable de sélection ;
- obtention, à partir d'une première extrapolation linéaire et dudit au moins un canal de calcul, d'au moins un deuxième coefficient ;
- calcul de ladite fréquence de calibrage (Ccal), à partir de ladite deuxième variable de calcul et dudit au moins un deuxième coefficient.

7. Procédé selon l'une quelconque des revendications 1 à 6, **caractérisé en ce qu'**il comprend en outre les étapes suivantes, pour une sous bande de fréquence suivante :

- obtention (E140) d'une fréquence de départ (Cstart) ;
- obtention (E150) d'au moins une valeur de puissance de sortie de l'amplificateur associée à ladite fréquence de départ (Cstart).

8. Procédé selon l'une quelconque des revendications 2 à 7, **caractérisé en ce que** l'étape b) comprend une étape d'obtention d'au moins une première dispersion fréquentielle égale à la différence entre la valeur de puissance de sortie associée audit canal courant et la valeur de puissance de sortie associée audit canal suivant.

**9.** Procédé selon l'une quelconque des revendications 1 à 8, **caractérisé en ce que** l'amplificateur est un amplificateur de puissance à double gain, pouvant être configuré selon des première et seconde configurations de gain.

**10.** Procédé selon la revendication 9, **caractérisé en ce que** l'étape b) comprend une étape d'obtention d'au moins une deuxième dispersion fréquentielle égale à la différence entre :

- une première différence de puissance égale à la différence entre :

- une première valeur de puissance de sortie associée à ladite première configuration de gain et audit canal courant ; et
- une deuxième valeur de puissance de sortie associée à ladite seconde configuration de gain et audit canal courant ; et

- une deuxième différence de puissance égale à la différence entre :

- une troisième valeur de puissance de sortie associée à ladite première configuration de gain et audit canal suivant ; et
- une quatrième valeur de puissance de sortie associée à ladite seconde configuration de gain et audit canal suivant.

**11.** Procédé selon l'une quelconque des revendications 1 à 10, **caractérisé en ce que** ladite chaîne de transmission de signaux d'information est une chaîne conforme à la norme UMTS.

**12.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé d'obtention selon au moins une des revendications 1 à 11, lorsque ledit programme est exécuté sur un ordinateur.

**13.** Moyen de stockage, éventuellement totalement ou partiellement amovible, lisible par un ordinateur, stockant un jeu d'instructions exécutables par ledit ordinateur pour mettre en oeuvre le procédé d'obtention selon au moins une des revendications 1 à 11.

**14.** Dispositif d'obtention d'au moins une fréquence de calibrage pour le calibrage d'une chaîne de transmission pouvant transmettre des signaux d'information sur une bande de fréquence comprenant une pluralité de canaux, ladite chaîne comprenant des moyens de génération (201) d'un signal de commande, des moyens d'émission (202) des signaux d'information commandés par ledit signal de commande et un amplificateur (203) desdits signaux d'information, ledit amplificateur pouvant être configuré selon au moins une configuration de gain, **caractérisé en ce que** ledit dispositif comprend :

- des moyens d'obtention d'au moins une valeur de puissance de sortie de l'amplificateur ;
- des moyens d'obtention d'au moins une dispersion fréquentielle, à partir de la ou des valeurs de puissance ;
- des moyens de détection permettant de détecter si au moins une contrainte liée à la ou les dispersions fréquentielles est vérifiée ;
- des moyens d'obtention d'une sous bande de fréquence courante ;
- des moyens d'obtention d'une fréquence de calibrage pour ladite sous bande de fréquence courante.

**Claims**

**1.** Method for obtaining at least one calibration frequency for calibrating a transmission chain that can transmit information signals on a frequency band comprising a plurality of channels, said chain comprising means for generating (201) a control signal, means for emitting (202) information signals controlled by said control signal and an amplifier (203) of said information signals, said amplifier being able to be configured according to at least one gain configuration, **characterised in that** it comprises the following steps:

a) for each channel and each gain configuration, obtaining (E20, E30) an output power value of the amplifier;
b) obtaining (E80) at least one frequency dispersion, based on said power values;
c) for each frequency dispersion obtained, detection (E90) making it possible to detect whether a constraint associated to said frequency dispersion is satisfied;

d) if at least one constraint is not satisfied, then the following steps are carried out:

e) obtaining (E120) a current frequency subband;

f) obtaining (E130) a calibration frequency (Ccal) for said current frequency subband.

2.  Method according to claim 1, **characterised in that** it comprises the following steps:

i) selecting a current channel from among said plurality of channels;

ii) for said current channel, implementing step b) of obtaining at least one frequency dispersion;

iii) for said current channel, implementing step c) of detecting; if at least one constraint is not satisfied, then the steps d) and e) of obtaining a current frequency subband and a calibration frequency are carried out;

iv) selecting a following channel from among said plurality of channels, said following channel becoming the current channel before returning to the step ii).

3.  Method according to any of claims 1 and 2, **characterised in that** it comprises the following steps:

- searching (E100) among the constraints that are not satisfied the one which is the least best satisfied, called worst case constraint, according to a determined comparison criterion;

- obtaining (E110) of at least one selection variable, according to said worst case constraint.

4.  Method according to any of claims 1 to 3, **characterised in that** said step d) of obtaining a current frequency subband comprises a step of determining (E120) an ending frequency (Cstop) for said current frequency subband.

5.  Method according to claims 3 and 4, **characterised in that** said step of determining an ending frequency comprises the following steps:

- obtaining, based on a first expression chosen from among a first plurality of expressions according to said at least one selection variable, a first calculation variable;

- obtaining, on the basis of a first linear extrapolation, at least one first coefficient;

- calculating of said ending frequency (Cstop), based on said first calculation variable and of said at least one first coefficient.

6.  Method according to any of claims 3 to 5, **characterised in that** said step e) of obtaining a calibration frequency (Ccal) comprises the following steps:

- obtaining, on the basis of a second expression chosen from among a second plurality of expressions according to said at least one selection variable, a second calculation variable;

- obtaining at least one calculation channel, by analysis of at least one constraint determined according to said at least one selection variable;

- obtaining, on the basis of a first linear extrapolation and of said at least one calculation channel, at least one second coefficient;

- calculating said calibration frequency (Ccal), on the basis of said second calculation variable and of said at least one second coefficient.

7.  Method according to any of claims 1 to 6, **characterised in that** it further comprises the following steps, for a following frequency subband:

- obtaining (E140) a starting frequency (Cstart);

- obtaining (E150) at least one output power value of the amplifier associated to said starting frequency (Cstart).

8.  Method according to any of claims 2 to 7, **characterised in that** step b) comprises a step of obtaining at least one first frequency dispersion equal to the difference between the output power value associated to said current channel and the output power value associated to said following channel.

9.  Method according to any of claims 1 to 8, **characterised in that** the amplifier is a double gain power amplifier, able to be configured according to first and second gain configurations.

10. Method according to claim 9, **characterised in that** step b) comprises a step of obtaining at least one second frequency dispersion equal to the difference between:

- a first power difference equal to the difference between:

- a first output power value associated to said first gain configuration and to said current channel; and
- a second output power value associated to said second gain configuration and to said current channel; and

- a second power difference equal to the difference between:

- a third output power value associated to said first gain configuration and to said following channel; and
- a fourth output power value associated to said second gain configuration and to said following channel.

11. Method according to any of claims 1 to 10, **characterised in that** said transmission chain of information signals is a chain compliant with the UMTS standard.

12. Computer programme product which can be downloaded from a communication network and/or recorded on a support that can be read by a computer and/or that can be executed by a processor, **characterised in that** it comprises a programme code instructions for the execution of the steps of the method for obtaining according to at least one of claims 1 to 11, when said programme is executed on a computer.

13. Means of storage, possibly totally or partially removable, that can be read by a computer, storing a set of instructions that can be executed by said computer in order to implement the method of obtaining according to at least one of claims 1 to 11.

14. Device for obtaining at least one calibration frequency for calibrating a transmission chain able to transmit information signals on a frequency band comprising a plurality of channels, said chain comprising means of generating (201) a control signal, means of emitting (202) information signals controlled by said control signal and an amplifier (203) of said information signals, said amplifier able to be configured according to at least one gain configuration, **characterised in that** said device comprises:

- means for obtaining at least one output power value of the amplifier;
- means for obtaining at least one frequency dispersion, based on the power value(s);
- means for detecting making it possible to detect whether at least one constraint linked to the frequency dispersion(s) is satisfied;
- means for obtaining a current frequency subband;
- means for obtaining a calibration frequency for said current frequency subband.

**Patentansprüche**

1. Verfahren zum Ermitteln mindestens einer Kalibrierungsfrequenz zum Kalibrieren einer Übertragungskette, mit der Informationssignale über ein Frequenzband, aufweisend eine Vielzahl von Kanälen, übertragbar sind, wobei die Kette Mittel zum Generieren (201) eines Steuersignals, Mittel zum Senden (202) der Informationssignale, die durch das Steuersignal gesteuert werden, und einen Verstärker (203) der Informationssignale aufweist, wobei der Verstärker nach mindestens einer Verstärkungskonfiguration konfigurierbar ist, **dadurch gekennzeichnet, dass** das Verfahren die folgenden Schritte aufweist:

a) Ermitteln (E20, E30) eines Ausgangsleistungswertes des Verstärkers für jeden Kanal und jede Verstärkungskonfiguration;
b) Ermitteln (E80) mindestens einer Frequenzstreuung aus den Leistungswerten;
c) Feststellung (E90), die es erlaubt festzustellen, ob eine an die Frequenzstreuung gebundene Bedingung für jede ermittelte Frequenzstreuung erfüllt ist;
wenn mindestens eine Bedingung nicht erfüllt ist, dann werden die folgenden Schritte ausgeführt:
d) Ermitteln (E120) eines aktuellen Unterfrequenzbandes;
e) Ermitteln (E130) einer Kalibrierungsfrequenz (Ccal) für das aktuelle Unterfrequenzband.

2. Verfahren nach Anspruch 1, **dadurch gekennzeichnet, dass** es die folgenden Schritte aufweist:

i) Auswählen eines aktuellen Kanals aus der Vielzahl der Kanäle;

ii) Ausführen des Schrittes b) Ermitteln mindestens einer Frequenzstreuung für den aktuellen Kanal;

iii) Ausführen des Schrittes c) Feststellung für den aktuellen Kanal; wenn mindestens eine Bedingung nicht erfüllt ist, dann werden die Schritte d) und e) Ermitteln eines aktuellen Unterfrequenzbandes und einer Kalibrierungsfrequenz ausgeführt;

iv) Auswählen eines Folgekanals aus der Vielzahl der Kanäle, wobei der Folgekanal zum aktuellen Kanal wird, bevor zu dem Schritt ii) zurückgekehrt wird.

3. Verfahren nach mindestens einem der Ansprüche 1 und 2, **dadurch gekennzeichnet, dass** es die folgenden Schritte aufweist:

- Suchen (E100) unter den Bedingungen, die nicht erfüllt sind, nach derjenigen, die am wenigsten erfüllt ist, nämlich die Worst-Case-Bedingung, gemäß einem festgelegten Vergleichskriterium;
- Ermitteln (E110) mindestens einer Auswahlvariable in Abhängigkeit von der Worst-Case-Bedingung.

4. Verfahren nach mindestens einem der Ansprüche 1 bis 3, **dadurch gekennzeichnet, dass** der Schritt d) Ermitteln eines aktuellen Unterfrequenzbandes einen Schritt zum Festlegen (E120) einer Endfrequenz (Cstop) für das aktuelle Unterfrequenzband aufweist.

5. Verfahren nach den Ansprüchen 3 und 4, **dadurch gekennzeichnet, dass** der Schritt zum Festlegen einer Endfrequenz die folgenden Schritte aufweist:

- Ermitteln einer ersten Berechnungsvariable aus einer ersten Gleichung, die aus einer ersten Vielzahl von Gleichungen in Abhängigkeit von der mindestens einen Auswahlvariable gewählt ist;
- Ermitteln mindestens eines ersten Koeffizienten aus einer ersten linearen Extrapolation;
- Berechnen der Endfrequenz (Cstop) aus der ersten Berechnungsvariable und dem mindestens einen ersten Koeffizienten.

6. Verfahren nach mindestens einem der Ansprüche 3 bis 5, **dadurch gekennzeichnet, dass** der Schritt e) Ermitteln einer Kalibrierungsfrequenz (Ccal) die folgenden Schritte aufweist:

- Ermitteln einer zweiten Berechnungsvariable aus einer zweiten Gleichung, die aus einer zweiten Vielzahl von Gleichungen in Abhängigkeit von der mindestens einen Auswahlvariable ausgewählt ist;
- Ermitteln mindestens eines Berechnungskanals durch Analyse mindestens einer festgelegten Bedingung in Abhängigkeit von der mindestens einen Auswahlvariable;
- Ermitteln mindestens eines zweiten Koeffizienten aus einer ersten linearen Extrapolation und aus dem mindestens einen Berechnungskanal;
- Berechnung der Kalibrierungsfrequenz (Ccal) aus der zweiten Berechnungsvariable und aus dem mindestens zweiten Koeffizienten.

7. Verfahren nach mindestens einem der Ansprüche 1 bis 6, **dadurch gekennzeichnet, dass** es unter anderem die folgenden Schritte für ein Folge-Unterfrequenzband aufweist:

- Ermitteln (E140) einer Startfrequenz (Cstart);
- Ermitteln (E150) mindestens eines Ausgangsleistungswertes des Verstärkers, der mit der Startfrequenz (Cstart) verknüpft ist.

8. Verfahren nach mindestens einem der Ansprüche 2 bis 7, **dadurch gekennzeichnet, dass** der Schritt b) einen Schritt zum Ermitteln mindestens einer ersten Frequenzstreuung aufweist, die der Differenz zwischen dem mit dem aktuellen Kanal verknüpften Ausgangsleistungswert und dem mit dem Folgekanal verknüpften Ausgangsleistungswert entspricht.

9. Verfahren nach mindestens einem der Ansprüche 1 bis 8, **dadurch gekennzeichnet, dass** der Verstärker ein Leistungsverstärker mit doppelter Verstärkung ist, der nach der ersten und zweiten Verstärkungskonfiguration konfigurierbar ist.

10. Verfahren nach Anspruch 9, **dadurch gekennzeichnet, dass** der Schritt b) einen Schritt zum Ermitteln mindestens einer zweiten Frequenzstreuung aufweist, die der Differenz gleicht zwischen:

- einer ersten Leistungsdifferenz, die der Differenz gleicht zwischen:

    - einem ersten Ausgangsleistungswert, der mit der ersten Verstärkungskonfiguration und dem aktuellen Kanal verknüpft ist; und
    - einem zweiten Ausgangsleistungswert, der mit der zweiten Verstärkungskonfiguration und dem aktuellen Kanal verknüpft ist; und

- einer zweiten Leistungsdifferenz, die der Differenz gleicht zwischen:

    - einem dritten Ausgangsleistungswert, der mit der ersten Verstärkungskonfiguration und dem Folgekanal verknüpft ist; und
    - einem vierten Ausgangsleistungswert, der mit der zweiten Verstärkungskonfiguration und dem Folgekanal verknüpft ist.

**11.** Verfahren nach mindestens einem der Ansprüche 1 bis 10, **dadurch gekennzeichnet, dass** die Signalinformationsübertragungskette eine mit der UMTS-Norm konforme Kette ist.

**12.** Computerprogrammprodukt, das von einem Kommunikationsnetzwerk herunterladbar und/oder auf einem mit einem Computer lesbaren Träger gespeichert und/oder durch einen Prozessor ausführbar ist, **dadurch gekennzeichnet, dass** es die Programmcodebefehle zum Ausführen der Verfahrensschritte zum Ermitteln nach mindestens einem der Ansprüche 1 bis 11 aufweist, sobald das Programm auf einem Computer ausgeführt wird.

**13.** Speichermittel, das gegebenenfalls vollständig oder teilweise portabel ist, durch einen Computer lesbar ist, und einen Satz von Befehlen speichert, die durch den Computer zum Ausführen des Verfahrens zum Ermitteln nach mindestens einem der Ansprüche 1 bis 11 ausführbar sind.

**14.** Vorrichtung zum Ermitteln mindestens einer Kalibrierungsfrequenz zum Kalibrieren einer Übertragungskette, mit der Informationssignale über ein Frequenzband, aufweisend eine Vielzahl von Kanälen, übertragbar sind, wobei die Kette Mittel zum Generieren (201) eines Steuersignals, Mittel zum Senden (202) der Informationssignale, die durch das Steuersignal gesteuert werden, und einen Verstärker (203) der Informationssignale aufweist, wobei der Verstärker nach mindestens einer Verstärkungskonfiguration konfigurierbar ist, **dadurch gekennzeichnet, dass** die Vorrichtung aufweist:

    - Mittel zum Ermitteln mindestens eines Ausgangsleistungswertes des Verstärkers;
    - Mittel zum Ermitteln mindestens einer Frequenzstreuung aus dem oder mehreren Leistungswerten;
    - Mittel zum Feststellen, ob mindestens eine an die Frequenzstreuung oder die Frequenzstreuungen gebundene Bedingung erfüllt ist;
    - Mittel zum Ermitteln eines aktuellen Unterfrequenzbandes;
    - Mittel zum Ermitteln einer Kalibrierungsfrequenz für das aktuelle Unterfrequenzband.

Fig. 1

Fig. 2

Fig. 4

## Fig. 3

Obtention nbr. freq — E10

Mesure $P_{HG}$ — E20

Mesure $P_{LG}$ — E30

Calcul $H_G$ - $L_G$ — E40

E60 Initialisation paramètres — E50

E1000

Count Freq. = nbr. freq ? — oui → Fin

non

Lecture paramètres — E70

Calcul dispersion fréquentielle — E80

E90

oui ← Analyse contraintes

non

Détermination pire cas — E100

Définition variable de sélection — E110

Calcul Cstop — E120

Calcul Ccal — E130

Calcul $Cstart_{N+1}$ — E140

$P_{HGstartN+1}$ — E150

$H_G$-$L_{GstartN+1}$ — E160

Mise à jour — E170

N+1 Countfreq-1 — E180

E400 Countfreq + 1

E200

non ← Count Freq.+1 = nbr. freq ?

E300

oui

Définition variable de sélection

E310 Calcul Cstop

Calcul Ccal

E320

30

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1389837 A

**Littérature non-brevet citée dans la description**

• *Stations de base pour téléphonie mobile (UMTS-FDD) recommandation sur les mesures,* 17 Septembre 2003, www.environnement-suisse.ch/electrosmog